# EUROPÄISCHE PATENTSCHRIFT

(11) **EP 3 170 776 B1**
(45) Veröffentlichungstag und Bekanntmachung des Hinweises auf die Patenterteilung: **30.12.2020**
(21) Anmeldenummer: 15003306.6
(22) Anmeldetag: 19.11.2015
(51) Int. Cl.: B65G 47/96, B65G 17/16, H01Q 13/20, H04W 84/20, H04W 84/04

(54) **FÖRDERVORRICHTUNG MIT STEUEREINHEITEN**
CONVEYOR DEVICE COMPRISING CONTROL UNITS
DISPOSITIF DE TRANSPORT AYANT DES UNITÉS DE COMMANDE

(43) Veröffentlichungstag der Anmeldung: 24.05.2017
(73) Patentinhaber: BEUMER Group GmbH & Co. KG, 59269 Beckum (DE)
(72) Erfinder: Kemker, Winfried, 48351 Everswinkel (DE)
(74) Vertreter: Philipp, Matthias

(56) Entgegenhaltungen:
- EP-A1- 1 627 831
- US-A1- 2004 109 745

## Beschreibung

Die Erfindung betrifft eine Fördervorrichtung mit einer Reihe von Fördereinheiten, die zur Bewegung entlang einer Förderstrecke antreibbar sind, wobei jede Fördereinheit einen Förderwagen, ein auf dem Förderwagen gehaltenes selektiv steuerbares Lastaufnahmemittel zum Aufnehmen und gezielten Abgeben eines Förderguts, eine Steuereinheit zum Ansteuern des Lastaufnahmemittels und eine Kommunikationsschnittstelle zum Empfangen von Steuerinformationen aufweist.

Gattungsgleiche Fördereinrichtungen sind aus US2004109745A1 und EP1627831A1 bekannt.

Bei einer solchen Fördervorrichtung stellt sich häufig das Problem, dass bei Betrieb der Förderanlage Steuerinformationen mittels einer drahtlosen Übertragungstechnik an alle Fördereinrichtungen übertragen werden müssen.

Die Aufgabe der Erfindung besteht darin, bei einer Fördervorrichtung, in möglichst einfacher Weise, eine Erreichbarkeit aller Fördereinrichtungen mittels einer drahtlosen Übertragungstechnik zu gewährleisten.

Diese Aufgabe wird bei einer gattungsgemäßen Fördervorrichtung durch die Merkmale von Anspruch 1 und/oder 2 gelöst.

Die Master-Kommunikationsschnittstellen dienen der Erreichbarkeit der Slave- Kommunikationsschnittstellen, indem die an eine Slave-Kommunikationsschnittstelle gerichtete Steuerinformation drahtlos an eine der Slave-Kommunikationsschnittstelle zugeordneten Master-Kommunikationsschnittstelle übertragen wird, die die empfangene Steuerinformation drahtgebunden an die Slave-Kommunikationsschnittstelle weiterreicht. Dadurch wird erreicht, dass während des Betriebs der Fördervorrichtung alle Kommunikationsschnittstellen mittels einer drahtlosen Übertragungstechnik erreichbar sind, wobei die Slave-Kommunikationsschnittstellen keine drahtlosen Kommunikationsschnittstellen benötigen.

Die Förderstrecke kann als Führungsbahn ausgebildet sein und die Förderwagen können mit Rädern zum Abrollen auf der Führungsbahn versehen sein.

Die Förderwagen können Zug-artig miteinander verbunden sein. Vorzugsweise kann zwischen unmittelbar benachbarten Förderwagen jeweils eine in allen Richtungen drehbare Kupplung angeordnet sein. Vorzugsweise ist zwischen zwei Master-Kommunikationsschnittstellen eine Mehrzahl an Slave-Kommunikationsschnittstellen angeordnet. Die Mehrzahl an Slave-Kommunikationsschnittstellen ist vorzugsweise einer Master-Kommunikationsschnittstelle zugeordnet.

Das Lastaufnahmemittel kann als eine einfache oder mehrfache Kippschale oder ein einfacher oder mehrfacher Querbandförderer ausgebildet sein.

Es kann vorgesehen sein, dass jede Steuereinheit für die Steuerung eines Antriebs des Lastaufnahmemittels zum Abgeben eines geförderten Gegenstands in einer bestimmten Richtung eingerichtet ist.

Die Erfindung wird nachfolgend anhand zweier Ausführungsbeispiele erläutert, wobei auf Zeichnungen Bezug genommen ist, in denen
Fig. 1 schematisch vereinfacht eine Fördervorrichtung mit einer Reihe von mit Steuereinheiten versehenen Fördereinheiten in einer Draufsicht zeigt; und
Fig. 2 schematisch vereinfacht eine Fördervorrichtung mit einer Reihe von mit Steuereinheiten versehenen Fördereinheiten in einer Draufsicht zeigt.

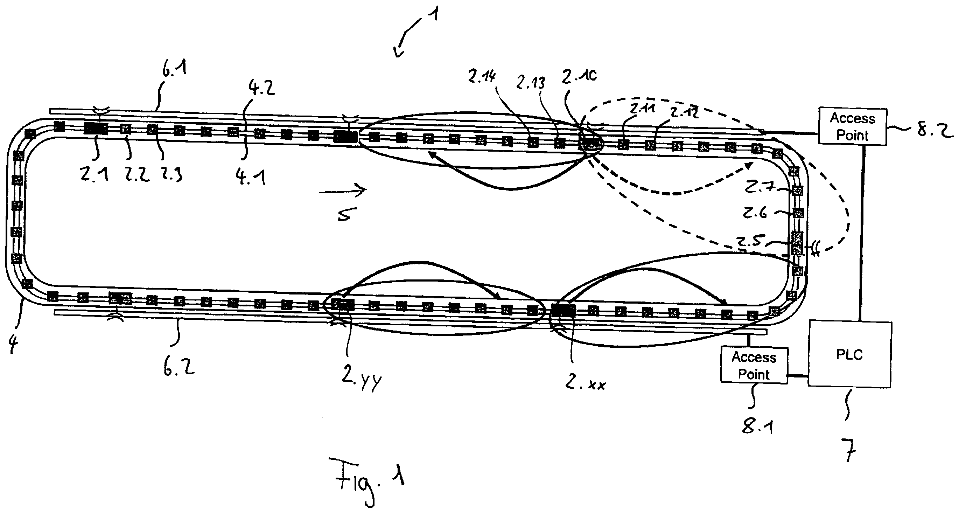

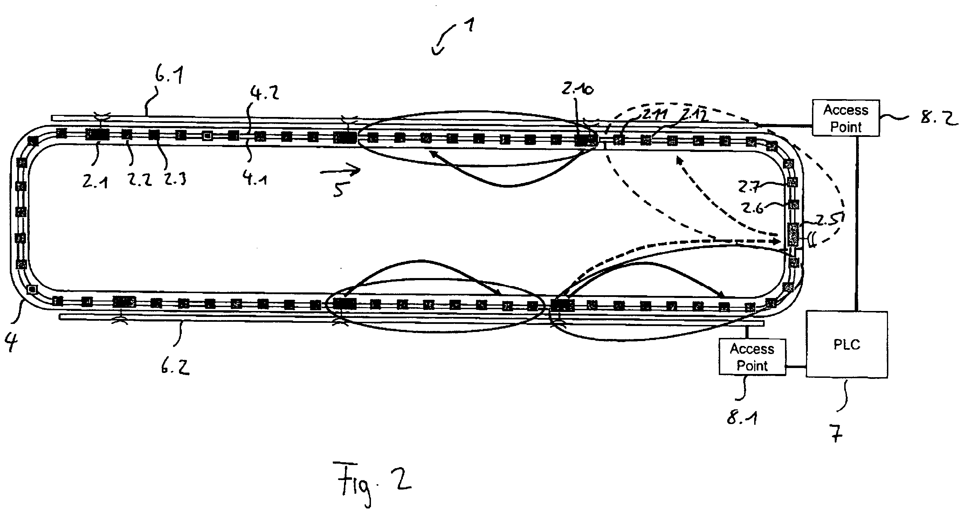

Fig. 1 und Fig. 2 zeigen lediglich einige wesentliche Elemente einer Fördervorrichtung 1, nämlich eine Reihe von Fördereinheiten 2.1-2.12, die sich entlang einer Förderstrecke 4, welche beispielsweise mit Führungsschienen 4.1, 4.2 versehen ist, bewegen. Ein gesteuerter Fahrantrieb und eine Führung mittels Lauf- und Führungsrollen entlang der Förderstrecke 4 sind aus dem Stand der Technik bekannt und nicht im Einzelnen dargestellt. Gleiches gilt für eine Verbindung benachbarter Fördereinheiten 2.1-2.12 mit einer Kupplung.

Jede Fördereinheit 2.1-2.12 weist ein Lastaufnahmemittel auf, das mittels eines Antriebs zum Aufnehmen oder Abgeben eines zu sortierenden oder transportierenden Stückguts antreibbar ist. Bei dem Lastaufnahmemittel kann es sich beispielsweise um eine seitlich kippbare Kippschale oder um einen quer zur Förderrichtung oder Fahrtrichtung 5 der Fördereinheiten 2.1-2.12 angeordneten Quergurt- oder Querbandförderer handeln, so dass ein aufgenommenes Stückgut an einer bestimmten Aufnahmeposition aufgenommen und an einer bestimmten Abgabeposition gezielt abgegeben werden kann. Die Energieversorgung von Fahrantrieb und Antrieb kann drahtlos erfolgen, beispielsweise induktiv, oder über entlang der Förderstrecke 4 verlegte oder in diese integrierte elektrische Kontakte oder Schleifkontakte.

Jede Fördereinheit 2.1-2.12 ist mit einer Steuereinheit versehen, über die die Ansteuerung des Antriebs für das Lastaufnahmemittel erfolgt. Ferner ist jede Fördereinheit 2.1-2.12 mit einer Kommunikationsschnittstelle zum Empfangen von Steuerinformationen versehen. Die Kommunikationsschnittstellen sind in Master-Kommunikationsschnittstellen und Slave-Kommunikationsschnittstellen unterteilt, wobei jede Steuereinheit 2.1-2.12 eine Master-Kommunikationsschnittstelle oder eine Slave-Kommunikationsschnittstelle umfasst.

Die Master-Kommunikationsschnittstellen der Fördereinheiten 2.1, 2.5, 2.10 umfassen jeweils eine drahtlose Kommunikationsschnittstelle zum Empfangen von Steuerinformationen unter Verwendung einer drahtlosen Kommunikationstechnologie. Die Master-Kommunikationsschnittstellen der Fördereinheiten 2.1, 2.5, 2.10 umfassen Funkmodule, deren Antennen an den langen geraden Abschnitten der Förderstrecke 4 in einen Leckwellenleiter, oder eine geschlitzte Mikrowellenführung (Schlitzwellenleiter) 6.1, 6.2 eintauchen. Die Master-Kommunikationsschnittstellen der Fördereinheiten 2.1, 2.10 empfangen Steuerinformationen von einer Steuervorrichtung 7, welche Steuerinformationen enthaltende Funksignale mittels mit Antennen versehener Zugangspunkte 8.1, 8.2, die mit der Steuervorrichtung 7 drahtgebunden oder drahtlos verbunden sind, in den Schlitzhohlleiter 6.1 einspeist.

Die Slave-Kommunikationsschnittstellen umfassenden Fördereinheiten 2.2, 2.3, 2.6, 2.7, 2.11, 2.12 sind jeweils zwischen zwei Master-Kommunikationsschnittstellen umfassenden Fördereinheiten 2.1, 2.5, 2.10 angeordnet. Die Slave-Kommunikationsschnittstellen von Fördereinheiten 2.11, 2.12, die zwischen Fördereinheiten 2.5, 2.10 mit Master-Kommunikationsschnittstellen angeordnet sind, sind untereinander und mit den Master-Kommunikationsschnittstellen über einen Datenbus, bspw. einen Zweidrahtbus verbunden. Alternativ können die Slave-Kommunikationsschnittstellen von Fördereinheiten 2.11, 2.12 zwischen Fördereinheiten 2.5, 2.10 mit Master-Kommunikationsschnittstellen mit diesen sternförmig verkabelt sein.

Dabei sind, wie in Fig. 1 angedeutet, jeder Master-Kommunikationsschnittstelle eine Vielzahl von Slave-Kommunikationsschnittstellen zugeordnet, beispielsweise die Slave-Kommunikationsschnittstellen der auf eine Fördereinheit 2.10 mit Master-Kommunikationsschnittstelle nachfolgenden Fördereinheiten 2.13, 2.14. Da die Antenne des Funkmoduls der Master-Kommunikationsschnittstelle der Fördereinheit 2.5 in den Kurven und entlang der kurzen Seite der Förderstrecke 4 nicht in einen der Schlitzhohlleiter 6.1, 6.2 eintaucht, kann die Übertragung zwischen der Master-Kommunikationsschnittstelle der Fördereinheit 2.5 und der Steuervorrichtung 7 gestört oder unmöglich sein. Die Steuervorrichtung 7 kann bestimmen, wann die Master-Kommunikationsschnittstelle der Fördereinheit 2.5 nicht erreichbar ist, indem die Steuervorrichtung 7 die Position der Fördereinheiten 2.1-2.12 überwacht. Beispielsweise kann die Steuervorrichtung 7 die Fördereinheiten 2.1-2.12 regelmäßig zur Übermittlung von Positionsdaten auffordern.

Ist die Master-Kommunikationsschnittstelle der Fördereinheit 2.5 nicht erreichbar, werden entweder die der Master-Kommunikationsschnittstelle der Fördereinheit 2.5 zugeordneten Slave-Kommunikationsschnittstellen der Fördereinheiten 2.6, 2.7 der Master-Kommunikationsschnittstelle der Fördereinheit 2.10 zugeordnet, wie in Fig. 1 angedeutet, oder es wird die Information zur drahtlos nicht erreichbaren Master-Kommunikationsschnittstelle der Fördereinheit 2.5 von der Master-Kommunikationsschnittstelle der Fördereinheit 2.10 oder 2.xx weitergeleitet (wie in Fig. 2 angedeutet). Dabei wird die an die Master-Kommunikationsschnittstelle der Fördereinheit 2.5 bzw. die Slave-Kommunikations-schnittstellen der Fördereinheiten 2.6, 2.7 gerichtete Steuerinformationen von der Steuervorrichtung 7 an die Master-Kommunikationsschnittstelle der Fördereinheit 2.10 oder 2.xx gesendet, die ihrerseits die Steuerinformationen drahtgebunden an die Master-Kommunikationsschnittstelle der Fördereinheit 2.5 bzw. die Slave-Kommunikationsschnittstellen der Fördereinheiten 2.6, 2.7 weiterleitet. Auch eine Weiterleitung von 2.yy über 2.xx an 2.5 wäre denkbar, wenn beispielsweise die Master-Kommunikations-schnittstellen der Fördereinheiten 2.5 und 2.xx nicht erreichbar wären.

Werden die an die Slave-Kommunikationsschnittstellen der Steuereinheiten 2.6, 2.7 gerichteten Steuerinformationen an die Master-Kommunikationsschnittstelle der Fördereinheit 2.5 weitergeleitet, leitet diese die Steuerinformationen an die Slave-Kommunikationsschnittstellen der Fördereinheiten 2.6, 2.7 weiter. Während somit durch die Weiterleitung der Steuerinformationen von der erreichbaren Master-Kommunikationsschnittstelle der Fördereinheit 2.10 zu der Master-Kommunikationsschnittstelle der Fördereinheit 2.5 eine durch die ursprüngliche Zuordnung definierte Vorzugsrichtung des Informationsflusses beibehalten werden kann, wird diese durch die Neuzuordnung der Slave-Kommunikationsschnittstellen der Fördereinheiten 2.6, 2.7 zur Master-Kommunikationsschnittstelle der Fördereinheit 2.10 invertiert, d. h. die bevorzugte Kommunikationsrichtung kann, während die Master-Kommunikationsschnittstelle der Fördereinheit 2.5 nicht erreichbar ist, umgekehrt werden.

Das Weiterleiten der Steuerinformationen von der erreichbaren Master-Kommunikationsschnittstelle zu der nicht erreichbaren Master-Kommunikationsschnittstelle bzw. direkt an die Slave-Kommunikationsschnittstellen muss nur solange aufrecht erhalten werden, solange der Empfang der nicht erreichbaren Master-Kommunikationsschnittstelle gestört ist. Entfällt der Grund des fehlenden Empfangs, beispielsweise weil die Fördereinheit 2.5 aus dem Bereich, in dem ein Empfang von Steuerinformationen unmöglich ist, herausbewegt wird, können die Steuerinformationen wieder (direkt) an die Master-Kommunikationsschnittstelle der Fördereinheit 2.5 gesendet werden, die diese dann in bevorzugter Kommunikationsrichtung an die zugeordneten Slave-Kommunikationsschnittstellen weiterleitet. Alternativ kann der veränderte Zustand solange beibehalten werden, bis die Master-Kommunikationsschnittstelle der Fördereinheit 2.10 bzw. eine andere Master-Kommunikationsschnittstelle nicht erreichbar ist und die Einrichtung einer neuen Weiterleitung bzw. eine Neuzordnung der entsprechenden Master-Kommunikationsschnittstelle zugeordneten Slave-Kommunikationsschnittstellen nötig wird.

### Bezugszeichenliste

- 1: Fördervorrichtung
- 2.1-2.12: Fördereinheiten
- 4: Förderstrecke
- 4.1,4.2: Führungsschienen
- 5: Fahrtrichtung
- 6.1,6.2: Schlitzhohlleiter
- 7: Steuervorrichtung
- 8.1, 8.2: Zugangspunkte

## Patentansprüche

1. Fördervorrichtung (1) mit einer Reihe von Fördereinheiten (2.1-2.12), die zur Bewegung entlang einer Förderstrecke (4) antreibbar sind, wobei jede Fördereinheit (2.1-2.12) einen Förderwagen, ein auf dem Förderwagen gehaltenes selektiv steuerbares Lastaufnahmemittel zum Aufnehmen und gezielten Abgeben eines Förderguts, eine Steuereinheit zum Ansteuern des Lastaufnahmemittels und eine Kommunikationsschnittstelle zum Empfangen von Steuerinformationen aufweist, wobei die Kommunikationsschnittstellen in Master-Kommunikationsschnittstellen und Slave- Kommunikationsschnittstellen unterteilt sind, wobei jede Master-Kommunikationsschnittstelle eine drahtlose Kommunikationsschnittstelle umfasst und wobei jede Master-Kommunikationsschnittstelle und jede Slave-Kommunikationsschnittstelle eine drahtgebundene Kommunikationsschnittstelle umfassen und jede Slave-Kommunikationsschnittstelle dazu eingerichtet ist, Steuerinformationen von einer zugeordneten Master-Kommunikationsschnittstelle über entsprechende drahtgebundene Kommunikationsschnittstellen zu empfangen,
**dadurch gekennzeichnet, dass** die Fördervorrichtung (1) dazu eingerichtet ist, im Betrieb Steuerinformationen von einer ersten Master-Kommunikationsschnittstelle an eine zweite Master-Kommunikationsschnittstelle weiterzuleiten,
ferner umfassend eine Steuervorrichtung (7), die dazu eingerichtet ist, im Betrieb die Positionen der Reihe von Fördereinheiten zu überwachen und an die zweite Master-Kommunikationsschnittstelle adressierte Steuerinformationen an die erste Master-Kommunikationsschnittstelle weiterzuleiten, wenn die Steuervorrichtung (7) feststellt, dass die zweite Master-Kommunikationsschnittstelle in einem vorbestimmten Bereich ist, wobei
die Steuervorrichtung (7) eine drahtlose Kommunikationsschnittstelle aufweist und dazu eingerichtet ist, die Steuerinformationen an die Master-Kommunikationsschnittstellen zu übertragen und wobei der vorbestimmte Bereich ein Bereich ist, in dem eine direkte drahtlose Übertragung der Steuerinformationen von der drahtlosen Kommunikationsschnittstelle der Steuervorrichtung (7) an eine Master-Kommunikationsschnittstelle einer in dem vorbestimmten Bereich befindlichen Fördereinheit (2.5) nicht möglich ist.

2. Fördervorrichtung (1) mit einer Reihe von Fördereinheiten (2.1-2.12), die zur Bewegung entlang einer Förderstrecke (4) antreibbar sind, wobei jede Fördereinheit (2.1-2.12) einen Förderwagen, ein auf dem Förderwagen gehaltenes selektiv steuerbares Lastaufnahmemittel zum Aufnehmen und gezielten Abgeben eines Förderguts, eine Steuereinheit zum Ansteuern des Lastaufnahmemittels und eine Kommunikationsschnittstelle zum Empfangen von Steuerinformationen aufweist, wobei die Kommunikationsschnittstellen in Master-Kommunikationsschnittstellen und Slave- Kommunikationsschnittstellen unterteilt sind, wobei jede Master-Kommunikationsschnittstelle eine drahtlose Kommunikationsschnittstelle umfasst und wobei jede Master-Kommunikationsschnittstelle und jede Slave-Kommunikationsschnittstelle eine drahtgebundene Kommunikationsschnittstelle umfassen und jede Slave-Kommunikationsschnittstelle dazu eingerichtet ist, Steuerinformationen von einer zugeordneten Master-Kommunikationsschnittstelle über entsprechende drahtgebundene Kommunikationsschnittstellen zu empfangen,
**dadurch gekennzeichnet, dass** die Fördervorrichtung (1) dazu eingerichtet ist, im Betrieb eine Zuordnung von Master-Kommunikationsschnittstellen und Slave-Kommunikationsschnittstellen dynamisch zu ändern,
ferner umfassend eine Steuervorrichtung (7), die dazu eingerichtet ist, im Betrieb die Positionen der Reihe von Fördereinheiten (2.1, 2.5, 2.10) zu überwachen und die Zuordnung der Master-Kommunikationsschnittstellen und Slave-Kommunikationsschnittstellen zu ändern, wenn die Steuervorrichtung (7) feststellt, dass eine der Master-Kommunikationsschnittstellen in einem vorbestimmten Bereich ist, wobei die Steuervorrichtung (7) eine drahtlose Kommunikationsschnittstelle aufweist und dazu eingerichtet ist, die Steuerinformationen an die Master-Kommunikationsschnittstellen zu übertragen und wobei der vorbestimmte Bereich ein Bereich ist, in dem eine direkte drahtlose Übertragung der Steuerinformationen von der drahtlosen Kommunikationsschnittstelle der Steuervorrichtung (7) an eine Master-Kommunikationsschnittstelle einer in dem vorbestimmten Bereich befindlichen Fördereinheit (2.5) nicht möglich ist.

3. Fördervorrichtung (1) nach einem der vorangehenden Ansprüche, **dadurch gekennzeichnet, dass** die Förderstrecke (4) eine Führungsbahn ist und die Förderwagen mit Rädern zum Abrollen auf der Führungsbahn versehen sind.

4. Fördervorrichtung (1) nach einem der vorangehenden Ansprüche, **dadurch gekennzeichnet, dass** die Förderwagen Zug-artig miteinander verbunden sind und zwischen zwei Master-Kommunikationsschnittstellen eine Mehrzahl an Slave-Kommunikationsschnittstellen angeordnet ist.

5. Fördervorrichtung (1) nach Anspruch 4, **dadurch gekennzeichnet, dass** die Mehrzahl an Slave-Kommunikationsschnittstellen einer Master-Kommunikationsschnittstelle zugeordnet ist.

6. Fördervorrichtung (1) nach einem der vorangehenden Ansprüche, **dadurch gekennzeichnet, dass** jede Steuereinheit für die Steuerung eines Antriebs des Lastaufnahmemittels zum Abgeben eines geförderten Gegenstands in einer bestimmten Richtung eingerichtet ist.

## Claims

1. Conveyor device (1) with a series of conveyor units (2.1-2.12) that can be driven to move along a conveyor line (4), wherein each conveyor unit (2.1-2.12) has a conveyor carriage, a selectively controllable load-handling device which is held on the conveyor carriage for the receiving and targeted delivery of a conveyed item, a control unit for actuating the load-handling device and a communication interface for receiving control information, wherein the communication interfaces are divided into master communication interfaces and slave communication interfaces, wherein each master communication interface comprises a wireless communication interface and wherein each master communication interface and each slave communication interface comprise a wired communication interface and each slave communication interface is set up to receive control information from an assigned master communication interface via corresponding wired communication interfaces,
**characterised in that** the conveyor device (1) is set up to forward control information from a first master communication interface to a second master communication interface during operation,
further comprising a control device (7) that is set up to monitor the positions of the series of conveyor units during operation and to forward control information addressed to the second master communication interface to the first master communication interface if the control device (7) establishes that the second master communication interface is in a predetermined area, wherein
the control device (7) has a wireless communication interface and is set up to transmit the control information to the master communication interfaces and wherein the predetermined area is an area in which direct wireless transmission of control information from the wireless communication interface of the control device (7) to a master communication interface of a conveyor unit (2.5) located in the predetermined area is not possible.

2. Conveyor device (1) with a series of conveyor units (2.1-2.12) that can be driven to move along a conveyor line (4), wherein each conveyor unit (2.1-2.12) has a conveyor carriage, a selectively controllable load-handling device which is held on the conveyor carriage for the receiving and targeted delivery of a conveyed item, a control unit for actuating the load-handling device and a communication interface for receiving control information, wherein the communication interfaces are divided into master communication interfaces and slave communication interfaces,
wherein each master communication interface comprises a wireless communication interface and wherein each master communication interface and each slave communication interface comprise a wired communication interface and each slave communication interface is set up to receive control information from an assigned master communication interface via corresponding wired communication interfaces,
**characterised in that** the conveyor device (1) is set up to alter an assignment of master communication interfaces and slave communication interfaces dynamically during operation,
further comprising a control device (7) that is set up to monitor the position of the series of conveyor units (2.1, 2.5, 2.10) during operation and to alter the assignment of the master communication interfaces and slave communication interfaces if the control device (7) establishes that one of the master communication interfaces is in a predetermined area, wherein
the control device (7) has a wireless communication interface and is set up to transmit the control information to the master communication interfaces and wherein the predetermined area is an area in which direct wireless transmission of the control information from the wireless communication interface of the control device (7) to a master communication interface of a conveyor unit (2.5) located in a predetermined area is not possible.

3. Conveyor device (1) according to one of the preceding claims, **characterised in that** the conveyor section (4) is a guide track and the conveyor carriages are equipped with wheels for rolling on the guide track.

4. Conveyor device (1) according to one of the preceding claims, **characterised in that** the conveyor carriages are connected to one another in the form of a train and a plurality of slave communication interfaces is arranged between two master communication interfaces.

5. Conveyor device (1) according to claim 4, **characterised in that** the plurality of slave communication interfaces is assigned to a master communication interface.

6. Conveyor device (1) according to one of the preceding claims, **characterised in that** each control unit is set up to control a drive element of the load-handling device to deliver a conveyed item in a particular direction.

## Revendications

1. Un dispositif de convoyage(1) composé d'une série de groupes de convoyage (2.1-2.12) qui peut être entraîné le long d'une ligne de convoyage (4), et chaque groupe de convoyage (2.1-2.12) a une benne de convoyage, un dispositif de manutention dont la charge est contrôlée, de manière sélective, et qui est implanté sur la benne de convoyage pour assurer la réception et la livraison ciblée d'un article ainsi convoyé, un groupe de commande qui active le dispositif de manutention de charge et une interface de communication qui reçoit les informations de commande, et les interfaces de communication se divisent en interfaces principales de communication et en interfaces asservies de communication, et chaque interface principale de communication comporte une interface de communication sans fil et chaque interface principale de communication et chaque interface asservie de communication comportent une interface de communication câblée et chaque interface asservie de communication est programmée pour recevoir des informations de commande en provenance d'une interface principale attribuée de communication via des interfaces câblées correspondantes de communication,
se **caractérise par le fait que** ce dispositif de convoyage (1) est programmé pour transmettre des informations de commande depuis une première interface principale de communication et à destination d'une deuxième interface principale de communication pendant le fonctionnement,
et comporte également un dispositif de commande (7) qui est programmé pour surveiller les positions des séries de groupes de convoyage pendant le fonctionnement et pour transmettre les informations de commande adressées à la deuxième interface principale de communication à la première interface principale de communication lorsque le dispositif de commande (7) établit que la deuxième interface principale de communication se trouve dans une zone prédéterminée, et
ce dispositif de commande (7) a une interface de communication sans fil et est programmé pour transmettre les informations de commande aux interfaces principales de communication et cette zone prédéterminée est une zone dans laquelle la transmission directe sans fil d'informations de commande depuis l'interface de communication sans fil du dispositif de commande (7) à une interface principale de communication d'un groupe de convoyage (2.5) qui se trouve dans la zone prédéterminée s'avère impossible.

2. Un dispositif de convoyage (1) avec une série de groupes de convoyage (2.1-2.12) qui peut être entraîné pour se déplacer le long d'une ligne de convoyage (4), et chaque groupe de convoyage (2.1-2.12) a une benne de convoyage, un dispositif de manutention dont la charge est contrôlée, de manière sélective, et qui est implanté sur la benne de convoyage pour assurer la réception et la livraison ciblée d'un article ainsi convoyé, un groupe de commande qui active le dispositif de manutention de charge et une interface de communication qui reçoit les informations de commande, et les interfaces de communication se divisent en interfaces principales de communication et en interfaces asservies de communication,
et chaque interface principale de communication comporte une interface de communication sans fil et chaque interface principale de communication et chaque interface asservie de communication comportent une interface de communication câblée et chaque interface asservie de communication est programmée pour recevoir des informations de commande en provenance d'une interface principale attribuée de communication via des interfaces câblées correspondantes de communication,
se **caractérise par le fait que** ce dispositif de convoyage (1) est programmé pour modifier l'affectation des interfaces principales de communication et des interfaces asservies de communication, de manière dynamique, pendant le fonctionnement,
et comporte également un dispositif de commande (7) qui est programmé pour surveiller la position des séries de groupes de convoyage (2.1, 2.5, 2.10) pendant le fonctionnement et pour modifier l'affectation des interfaces principales de communication et des interfaces asservies de communication lorsque le dispositif de commande (7) établit que l'une des interfaces principales de communication se trouve dans une zone prédéterminée, et
ce dispositif de commande (7) a une interface de communication sans fil et est programmé pour transmettre les informations de commande aux interfaces principales de communication et cette zone prédéterminée est une zone dans laquelle la transmission directe sans fil des informations de commande depuis l'interface de communication sans fil du dispositif de commande (7) à une interface principale de communication d'un groupe de convoyage (2.5) qui se trouve dans la zone prédéterminée s'avère impossible.

3. Le dispositif de convoyage (1) que décrit l'une ou l'autre des revendications précédentes, si ce n'est que la section de convoyage (4) est une voie de guidage et que les bennes de convoyage sont équipées de roues pour assurer la circulation des bennes sur cette voie de guidage.

4. Le dispositif de convoyage (1) que décrit l'une ou l'autre des revendications précédentes, si ce n'est que les bennes de convoyage sont raccordées les unes aux autres pour former un train et qu'une pluralité d'interfaces de communication est disposée entre deux interfaces principales de communication.

5. Le dispositif de convoyage (1) que décrit la revendication 4, si ce n'est que la pluralité d'interfaces asservies de communication est affectée à une interface principale de communication.

6. Le dispositif de convoyage (1) que décrit l'une ou l'autre des revendications précédentes, si ce n'est que chaque groupe de commande est programmé pour piloter un élément d'entraînement du dispositif de manutention de charge afin de livrer un article acheminé dans un sens spécifique.
